# EUROPEAN PATENT APPLICATION

(11) **EP 4 379 420 A1**
(43) Date of publication of application: **05.06.2024**
(21) Application number: 23214028.5
(22) Date of filing: 04.12.2023
(51) Int. Cl.: G01S 13/86, F41H 11/16, G01S 13/88, G01S 13/89, G01S 17/86, G01S 17/89, G05D 1/00

(54) **AUTOMATED UTILITY MARKOUT ROBOT SYSTEM AND METHOD**

(30) Priority: 02.12.2022 US 202263385920 P
(71) Applicant: ULC Technologies, LLC, Hauppauge, NY 11788 (US)
(72) Inventor: ASMARI, Ali, Center Moriches,, NY, 11934 (US); REN, Baiyang, Hauppauge,, NY, 11788 (US)
(74) Representative: Viering, Jentschura & Partner mbB Patent- und Rechtsanwälte

(57) **Abstract**

A portable robotic platform system and method for automatically detecting, locating, and marking underground assets are provided. The portable robotic platform includes a housing with a sensor module including ground penetrating radar (GPR), LiDAR, and electromagnetic (EM) sensors. The robotic platform automatically collects GPR and EM data and uses onboard post-processing techniques to interpret the sensor data and identify the location(s) of underground infrastructure. The portable robotic platform can be deployed to apply paint to a ground surface to identify the located underground assets.

## Description

### RELATED APPLICATIONS

This application claims priority to U.S. Provisional Patent Application No. 63/385,920 filed on December 2, 2022, the entire disclosure of which is incorporated herein by reference.

### FIELD OF THE INVENTION

This disclosure generally relates to underground utility detection. More specifically, this disclosure relates to a method and a system for detecting and identifying underground utility assets.

### BACKGROUND

Conventional underground utility detection and marking systems use manual techniques and off-site data processing, which results in a time-intensive, multi-day process to identify, locate, and mark underground utility assets. Additionally, the data collection, data processing, and utility marking steps are typically completed by at least three different individuals or entities.

In a typical utility location process, a ground penetrating radar (GPR) system is mounted to a pushcart, which is manually pushed across the ground surface in a grid-like pattern to complete the data collection step. The collected data is then sent to an offsite subject matter expert (SME) to process the data and interpret assets of interest that are underground. The SME interprets the data, generates a report, and transmits the report to a utility marker to paint the surface above the assets based on the locations identified on the report.

The existing process for identifying, locating, and marking underground utility assets creates a significant possibility for disconnect between the different entities, resulting in inefficient and inaccurate results. Additionally, the entire process can often take up to a week and additional coordination difficulties may result in significant project delays.

### SUMMARY

In an aspect of the present disclosure, a portable robotic platform for locating underground assets is provided. The platform includes a housing with a shell and one or more wheels. An encoder may be in communication with the one or more wheels. The platform also includes a sensor module with a LiDAR instrument, a ground penetrating radar, and an electromagnetic sensor. The platform further includes a processing module with a processor and memory unit. The processing module is designed to process data collected from the sensor module and identify an asset location associated with a location of the underground assets. The platform also includes a localization module designed to determine a robot location associated with the location of the portable robotic platform. The localization module uses processed data collected from the sensor module. The robotic platform also includes a paint module provided in a form of a paint can. The paint module can be in communication with a control module, the paint module beingdesigned to apply paint on a ground surface at the direction of the control module. The robotic platform can also include a communication module designed to connect to an interface module.

In some aspects, the processing module is designed to execute onboard post-processing of the data from the ground penetrating radar and the electromagnetic sensor to identify the location of the underground assets. In some forms, the onboard post-processing is provided in the form of a 3D migration using a synthetic aperture focusing technique. In some embodiments, the localization module is also designed to determine a navigation path based on the location of the portable robotic platform and the coordinates of one or more identified underground assets. The processing module can also be designed to generate a field intensity and field amplitude output plot based on the data from the electromagnetic sensor. The robotic platform can also include a control module with one or more drive units designed to control a motor of the robotic platform. In some aspects, the robotic platform includes a communication module operatively connected to a remote control device for controlling the robotic platform. The communication module can include a coax antenna in some embodiments. The robotic platform can also include a power module provided in the form of one or more batteries. In some forms, the housing of the robotic platform can include one or more access doors provided in the form of latched openings to provide access to one or more of the power module and the paint module. The robotic platform can also include a dual-frequency signal output system designed to map a network of underground infrastructure and identify different types of the underground assets. In some forms, the interface module is designed to generate and transmit information related to the location of the underground assets to one or more third-party applications.

In another aspect, a method for detecting and locating underground assets using a robotic platform is provided. The method includes providing the robotic platform, which includes a housing, a sensor module, a processing module, and one or more wheels. The sensor module is provided in a form of a ground penetrating radar, a LiDAR instrument, and an electromagnetic sensor. The method includes the step of initiating the sensor module and collecting data from the ground penetrating radar, the LiDAR instrument, and the electromagnetic sensor as the robotic platform travels across a ground surface. The method further includes the step of processing the data from the ground penetrating radar, the LiDAR instrument, and the electromagnetic sensor. The processing step can be executed onboard the robotic platform using the processing module. The method also includes identifying a location of one or more underground assets using the processed data and generating a visual output on a display of the one or more identified underground assets.

In some aspects, the visual output includes a C-scan map, a point cloud map, or a combination thereof. In some forms, the method further includes the steps of deploying the robotic platform to travel to a location of the one or more identified underground assets and painting the ground surface above the one or more identified underground assets. In some embodiments, the onboard post-processing step is provided in the form of a 3D migration using a synthetic aperture focusing technique.

In another aspect, a method of detecting and locating an underground asset using a robotic platform is provided. The method includes providing the robotic platform comprising a housing, a processing module, a control module, a localization module, one or more wheels operatively coupled to one or more encoders, and a sensor module. The sensor module can be provided in the form of a ground penetrating radar, a LiDAR instrument, an electromagnetic sensor, and an inertial measurement unit. The method can include initiating a ground penetrating radar and electromagnetic sensor as the robotic platform travels across a ground surface using the control module. The method can also include the step of collecting data from the ground penetrating radar, the LiDAR instrument, the inertial measurement unit, the electromagnetic sensor, and the one or more encoders. The data can be processed onboard the robotic platform using the processing module. The localization module can be executed to identify a location of the underground asset and a visual output can be generated. The visual output can include one or more underground assets identified from the onboard data processing.

In some aspects, the method also includes the steps of deploying the robotic platform to travel to the location of the underground asset and applying paint to the ground surface above the underground asset. In some embodiments, the onboard data processing further comprises a 3D migration process using a synthetic aperture focusing technique.

### BRIEF DESCRIPTION OF DRAWINGS

FIG. 1 is an isometric view of a front, a top, and a first side view of the automated utility markout system robot according to one embodiment;
FIG. 2 is a top plan view of the robot of FIG. 1;
FIG. 3 is a cross-sectional view of an interior portion of the robot of FIG. 1, taken along the line X1-X2 of FIG. 2;
FIG. 4 is a rear elevational view of the robot of FIG. 1;
FIG. 5 is a front elevational view of the robot of FIG. 1;
FIG. 6 is a second side elevational view of the robot of FIG. 1;
FIG. 7 is a bottom plan view of the robot of FIG. 1;
FIG. 8 is a block diagram of a control system of the robot of FIG. 1 according to an embodiment;
FIG. 9 is a flow diagram describing the process of detecting, locating, and marking an underground asset using the automated utility markout system robot of FIGS. 1-8 according to one embodiment;
FIG. 10 is an illustration of an example of a user interface of an interface module according to one embodiment;
FIG. 11 is a system block diagram of the robot operating system (ROS) of the automated utility markout system robot of FIGS. 1-8 according to one embodiment;
FIG. 12 is a block diagram illustrating the data processing method of the automated utility markout system robot of FIGS. 1-8 according to one embodiment; and
FIG. 13 is a screenshot illustrating a 3D post-process migration method according to one embodiment.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the attached drawings. The invention is capable of other embodiments and of being practiced or of being carried out in various ways. Also, it is to be understood that the phraseology and terminology used herein are for the purpose of description and should not be regarded as limiting. For example, the use of "including," "comprising," or "having" and variations thereof herein is meant to encompass the items listed thereafter and equivalents thereof as well as additional items.

As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

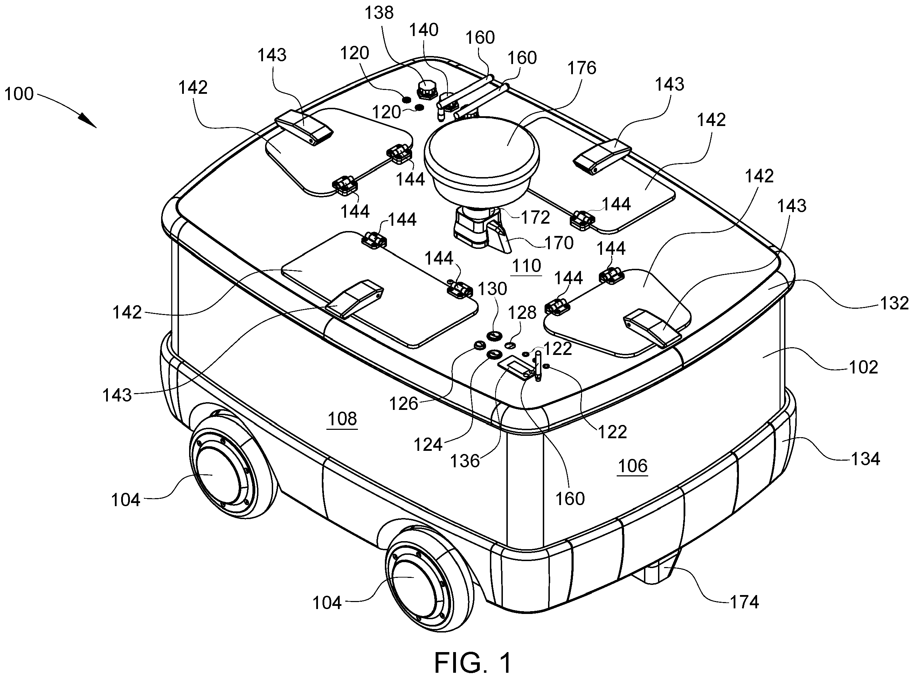

FIG. 1 illustrates an isometric view of a portable robotic platform 100 for detecting, locating, and marking underground assets. In some forms, the robotic platform 100 is semi-autonomous. In some aspects, the robotic platform 100 is fully autonomous. In some embodiments, the robotic platform 100 can include multiple modes of operation provided in the form of autonomous, semi-autonomous, remote control, or similar. In this non-limiting example, an operator can switch between modes of operation for the same robotic platform 100.

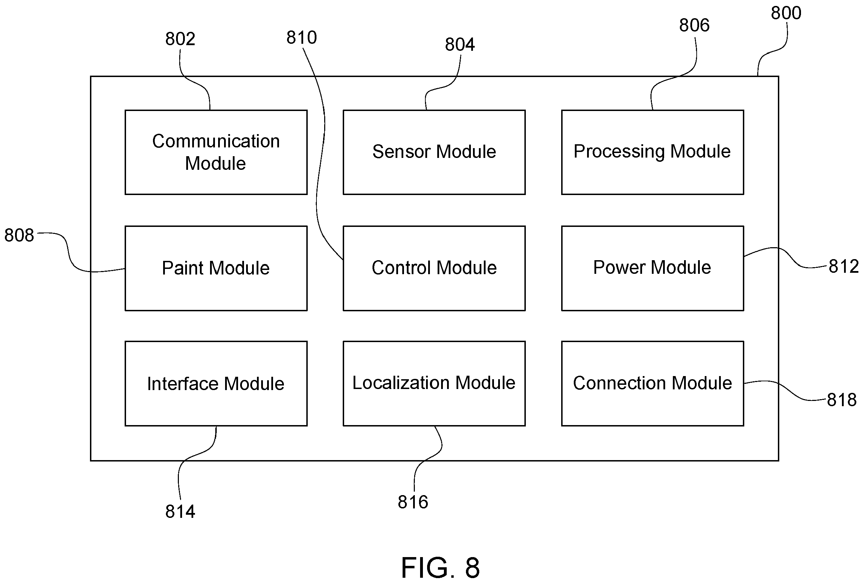

The robotic platform 100 can include a housing 102, wheels 104, and one or more subassemblies 800 (described in connection with FIG. 8). In some embodiments, the subassemblies 800 can include a communication module 802, a sensor module 804, a processing module 806, a paint module 808, a control module 810, a power module 812, an interface module 814, a localization module 816, and a connection module 818 (see FIG. 8). Additional components, modules, and/or subassemblies of the robotic platform 100 may be provided in some embodiments.

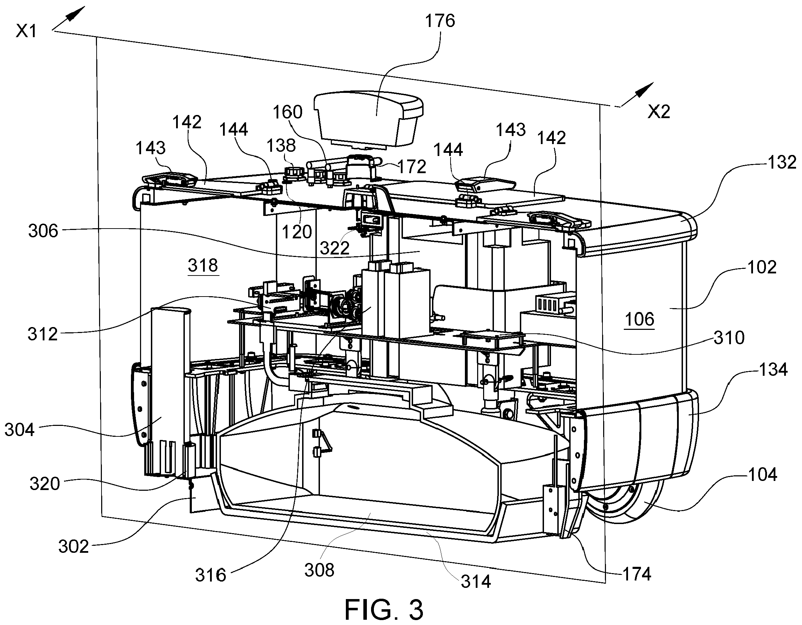

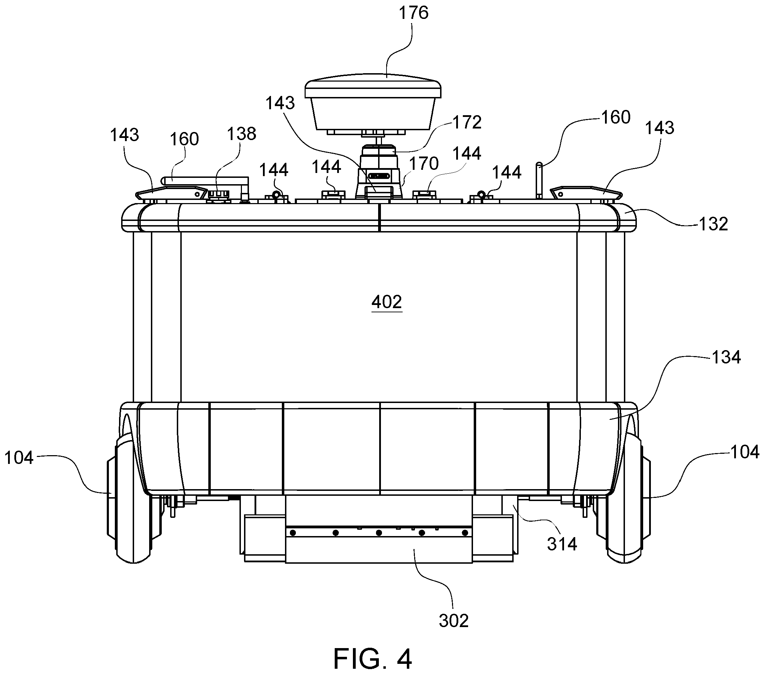

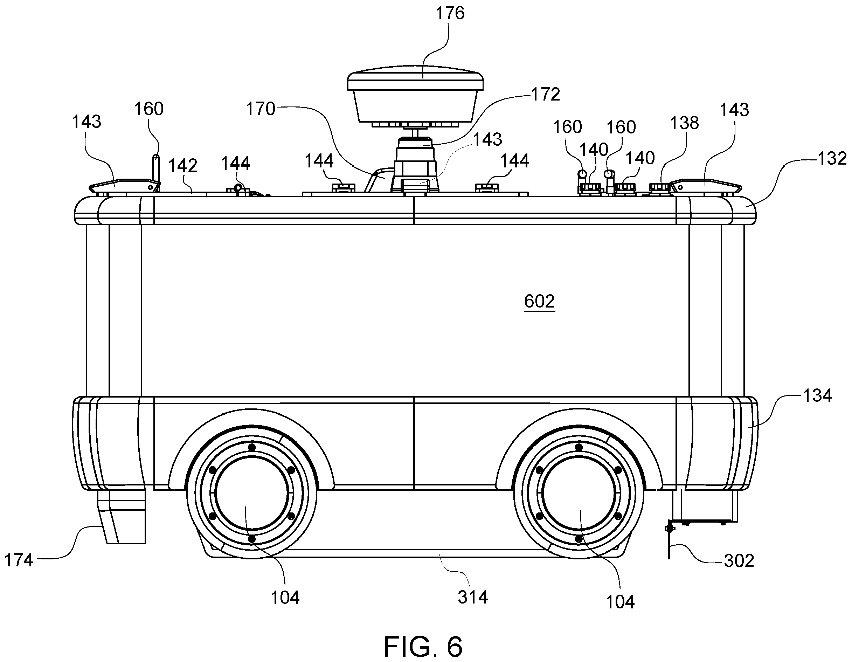

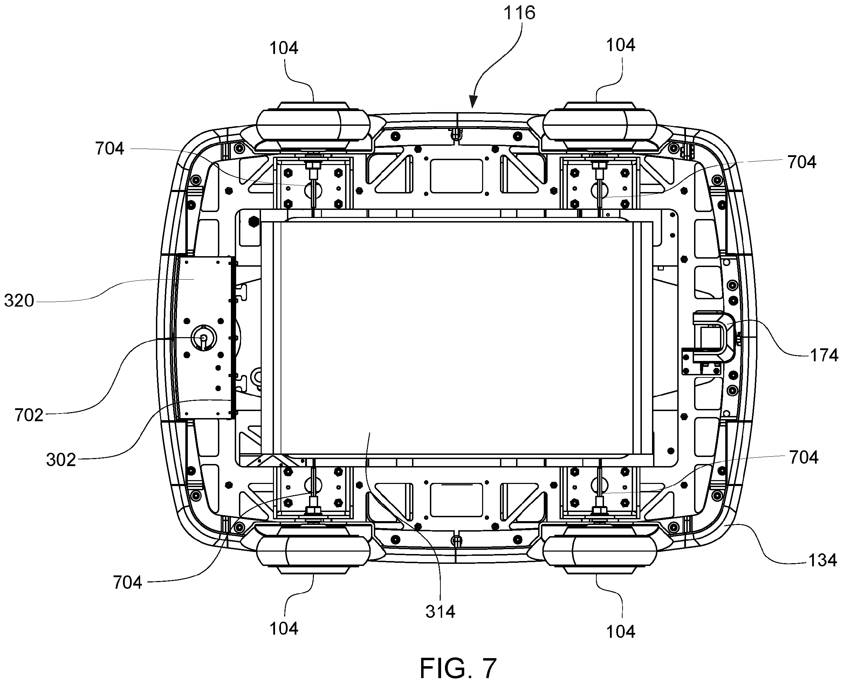

The robotic platform 100 can include the housing 102 provided in the form of a substantially rectangular shell with a front exterior face 106, a top exterior face 110, a first side exterior face 108, a back exterior face 402 (see FIG. 4), a second side exterior face 602 (see FIG. 6), and a bottom exterior face 116 (see FIG. 7). The housing 102 further includes a brim 132, and a skirt 134. In some embodiments, the shell of the housing 102 may be constructed of plastic, metal, or other durable material. The brim 132 may be provided in the form of bumpers that circumscribe the top, bottom, and/or side edges of the robotic platform 100. In some embodiments, the skirt 134 can be provided around the bottom portion of the housing 102. In some forms, the housing 102 may further include one or more access doors 142, lids, or similar coverings, to selectively provide access to one or more of the subassemblies 800, modules, or aspects of the platform. As shown in FIG. 3, the access doors 142 are provided for an operator to access one or more spray paint cans 304, batteries 306, and/or other internal components and subassemblies 800 of the robotic platform 100. The housing 102 can include the access doors 142 removably coupled to the top exterior face 110 of the housing 102. In some forms, the access doors 142 are provided in the form of latched openings 143 with one or more hinges 144. Additional access doors 142 or coverings may be provided to allow for convenient access to one or more components that need to be changed, removed, or replaced frequently. In at least this way, an operator can service and perform maintenance on the robotic platform 100 without disassembling the robotic platform 100. The subassemblies 800 and/or individual components may also be enclosed by one or more casings (not shown) within the overall housing 102. In some forms, additional subassemblies and/or components may be connected to, or otherwise, coupled to the robotic platform 100 (e.g., plug-n-play devices), which may also be contained within separate casings and/or within the housing 102. In some embodiments, the entire robotic platform 100 is waterproof, dustproof, water resistant, or otherwise designed to protect the components and subassemblies 800 of the robotic platform 100 from harsh environmental elements.

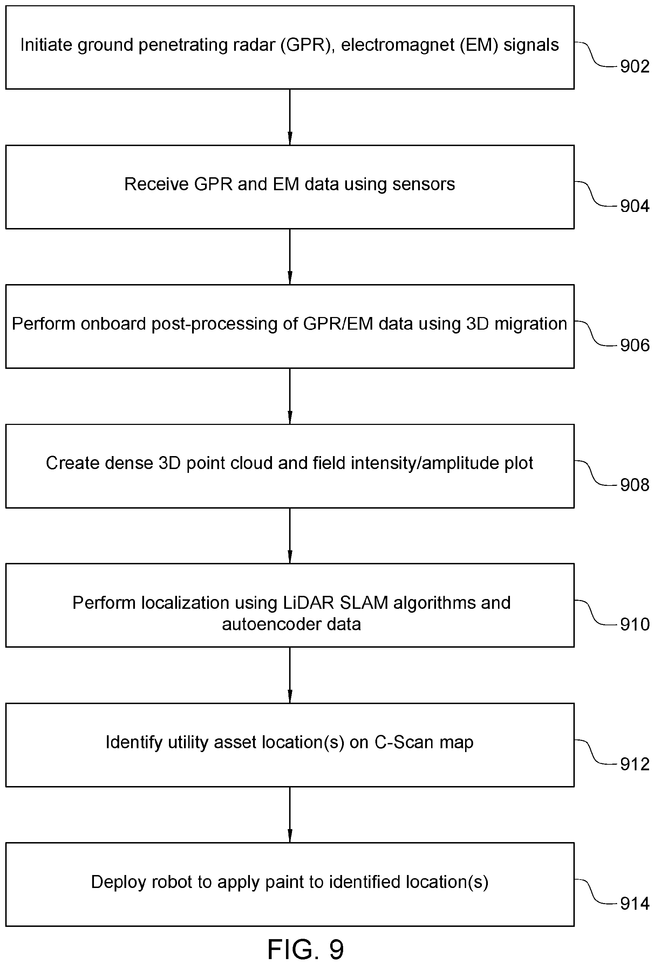

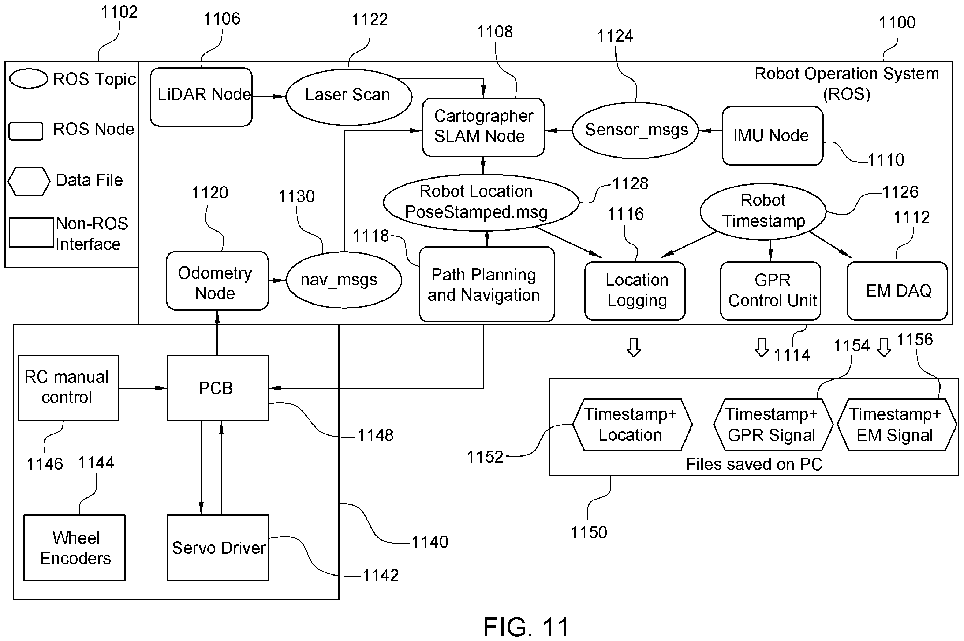

Still referring to FIG. 1, the robotic platform 100 can also include wheels 104, tracks, or other forms of movable support for the robotic platform. While the embodiment shown in FIGS. 1-7 includes four wheels, (i.e., two along each side of the rectangular shell on the first side exterior face 108 and the second side exterior face 114, respectively) it will be understood that this is not limiting and the robotic platform 100 can be provided in other configurations with various quantities of wheels 104 (or similar). The wheels 104 can include one or more encoders 1144 (see FIG. 11) associated therewith. The encoders 1144 can be in communication with one or more of the processing module 806, sensor module 804, localization module 816, control module 810, or other modules/subassemblies 800, as described in more detail in connection with FIG. 8. The system can utilize the encoders 1144 to track and process data related to a distance traveled by the robotic platform 100. The information and data collected by the encoders 1144 may also be used by the processing module 812 to determine an asset location associated with one or more underground assets, as described in more detail in connection with FIGS. 9-13. The wheels 104 can be mounted or otherwise removably connected to the housing 102 using one or more axles 704 (see FIG. 7). The wheels 104 may be designed with a quick disconnect or similar connection to allow one or more of the wheels 104 to be replaced without disassembling the robotic platform 100.

The robotic platform 100 can also include one or more antennas 160. Although FIGS. 1-6 show the robotic platform 100 with three antennas 160, it will be understood that the example shown is not limiting. The one or more antennas 160 can be designed to operatively connect and/or otherwise communicate with one or more computing devices (e.g., a laptop, a remote server, a tablet, a mobile device, etc.), a remote control device 1146 (see FIG. 11), or another signal-based communication device.

The robotic platform 100 can also include one or more ports for connecting to external devices (e.g., plug-and-play devices). The one or more ports can be provided in the form of one or more battery charger ports 120, a USB port 138, one or more HDMI ports 140, or a combination thereof. The one or more ports can also be provided in the form of a serial port, a direct current (DC) port, an Ethernet port, a digital visual interface (DVI) port, a DisplayPort, or another type of opening for a connector, adapter, or similar. In some forms, the one or more ports (e.g., 120, 138, and 140) can be provided with a cap or similar cover to waterproof the opening when not in use. The one or more antennas 160 and the one or more ports 120, 138, and 140 can be included in the communication module 802 and/or the connection module 818, or another subassembly 800 of the robotic platform 100, described in more detail in connection with FIG. 8.

The robotic platform 100 may also include one or more components for detecting, locating, and identifying underground assets. In some forms, the components are provided in the form of a LiDAR instrument 172, an electromagnetic (EM) sensor 174, a global positioning system (GPS) unit 176, a ground penetrating radar (GPR) 308, and an inertial measurement unit (IMU) 322 (see FIG. 3). In some forms, the LiDAR instrument 172 is disposed on and extends upwardly from the top exterior face 110 of the housing 102 and can be mounted on a LiDAR pedestal 170 to increase the height of the LiDAR instrument 172 and reduce signal interference, noise, or other system components negatively impacting the LiDAR instrument 172 readings. The onboard LiDAR instrument 172 enables the robotic platform 100 to execute autonomous navigation using the localization module 816, even in GPS-denied environments, such as congested urban areas where GPS signals get scattered.

The EM sensor 174 is provided in the form of a 3-axis (i.e., XYZ) EM sensor. In some aspects, the EM sensor 174 is provided with a measuring range of ± 100µT. The EM sensor 174 can include a transmitter and a receiver for projecting and receiving EM Signals from underground pipes, cables, and other underground assets. In some forms, the transmitter is located remotely from the robotic platform 100. In some forms, the transmitter is located proximate to the robotic platform 100. In the example shown in FIG. 1, the EM sensor 174 is installed proximate to the front side 106 of the housing 102. The EM sensor 174 may be mounted to a front interior face of the housing 102 and/or removably coupled to an interior portion of the skirt 134. In some forms, the EM sensor 174 is mounted near the ground surface, centered between the first side 108 and the second side 602 of the robotic platform. The EM sensor 174 may be mounted at a height slightly above a bottom of a noggin shell 314 (see FIG. 3), such that the noggin shell 314 can be used to indirectly protect the EM sensor 174 from damage from uneven ground surfaces.

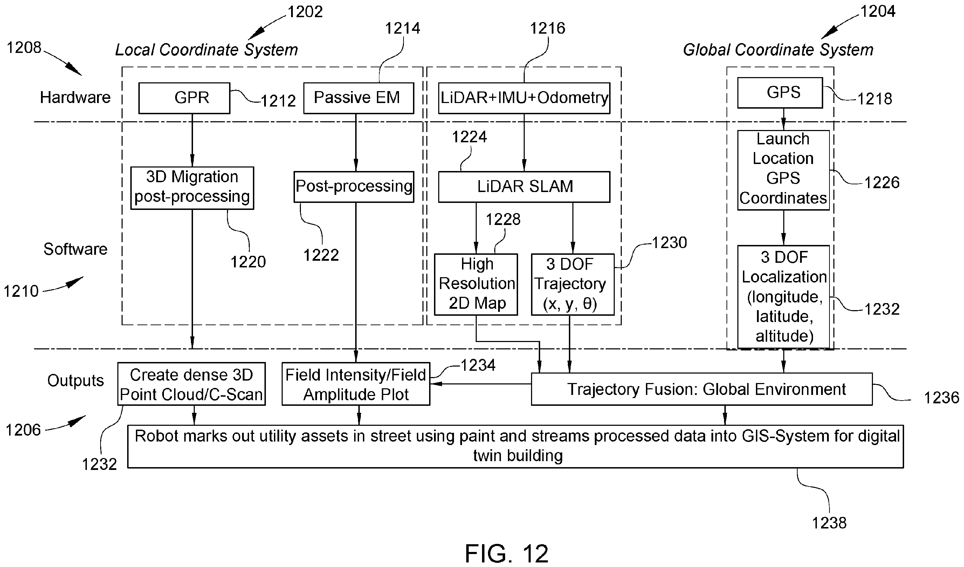

The GPS unit 176 is provided in the form of a compact GPS device designed to capture GPS coordinates of the robotic platform 100. The GPS unit 176 can collect GPS data with a three degrees of freedom localization (i.e., longitude, latitude, and altitude). As will be described in more detail in connection with FIG. 12, the GPS unit 176 data associated with the global localization of the robotic platform 100 can be fused with the trajectory information associated with the system's local coordinate system to generate a global environment. The fused information can be exported to a GIS system or other third-party application/database (e.g., a GIS system or similar). It will be understood that while the GPS unit 176 is shown mounted above the LiDAR instrument 172 on the top exterior face 110 of the robotic platform 100 in FIGS. 1-6, this is not considered limiting and the GPS unit 176 may be located inside the robotic platform in some embodiments (like the internal components shown in FIG. 3).

The robotic platform 100 can further include one or more indicator lights 122. In some forms, the indicator lights 122 are provided in the form of LED lights, although it will be appreciated that this is a non-limiting embodiment. In some embodiments, one or more of the indicator lights 122 can be triggered in response to an error code, a notification, a null signal, or other sensed parameter. In some forms, the indicator lights 122 can be provided in the form of different colored lights, which are associated with one more notifications or other alerts. In some embodiments, a diagnostic module (not shown) is designed to compare operating parameters to predefined thresholds and initiate error codes or other alerts. In some forms, the diagnostic module may utilize a datastore, lookup table, or other matching algorithm to generate error codes and alerts.

The robotic platform 100 can also include one or more switches, indicators, interfaces, or a combination thereof. For example, the robotic platform 100 can include switches provided in the form of a reset switch 124, a GPR power switch 126, an emergency stop switch 128, a control system power switch 130, or a combination thereof. It will be understood that the switches can be provided in the form of any component designed to receive user input (e.g., rocker switch, pushbutton, momentary action, latch, keyed, keypad, etc.). The robotic platform 100 can also include one or more interfaces, displays, screens 136, or similar. The screen 136 can be designed to display information to an operator of the robotic platform 100. The information displayed can include a battery charge level, system runtime, location coordinates, error codes, recommended maintenance procedures, and a location indicator (e.g., provide an alert when the robotic platform 100 is at a target location and/or is located directly above an identified underground asset). In some embodiments, the robotic platform 100 can include an interface designed to display one or more of the visual outputs discussed in connection with FIGS. 9-13.

Some embodiments can also include one or more labels on the housing (not shown). In some embodiments, the labels may be used for marketing purposes, such as a company logo. In some embodiments, the labels may be used to convey other information, like technical data related to the robotic platform and its operation, maintenance, and/or features.

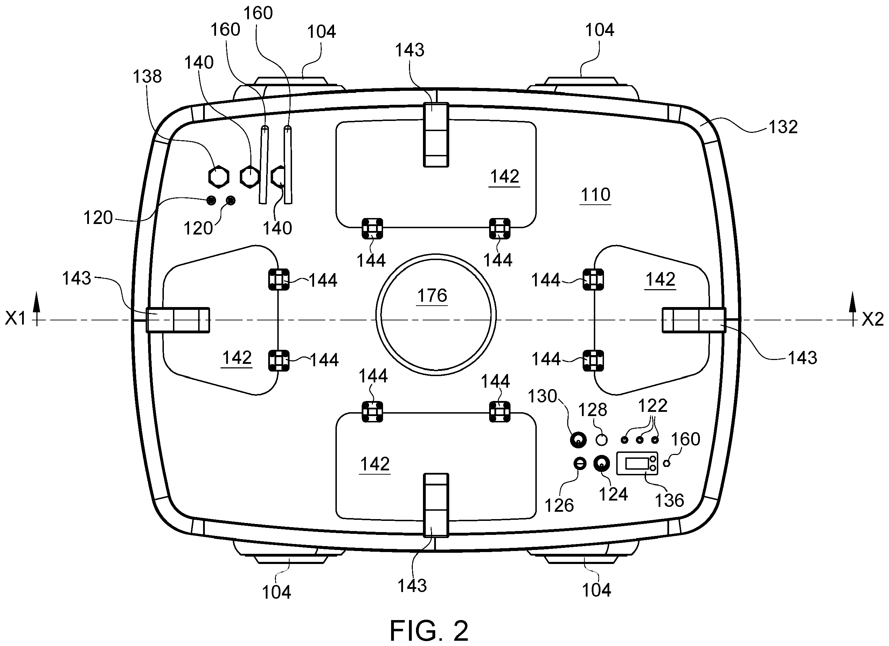

FIGS. 2-7 illustrate other views of the robotic platform 100 according to an embodiment. FIG. 2 illustrates a top view of the robotic platform 100, including the top exterior face 110. FIG. 3 illustrates a cross-sectional view of an interior portion of the robot of FIG. 1, taken along the line X1-X2 of FIG. 2.

As best seen in FIG. 3,a paint shield 302 protrudes downwardly from the housing 102 and is provided to prevent overspray from the spray paint can 304 or similar substance of the paint module 808 (see FIG. 8). The paint shield 302 may be constructed of plastic, metal, or other durable material. In the example shown in FIG. 3, the spray paint can 304 is installed adjacent to the back interior face 318 within a paint holder 320, which may be mounted to the back interior face 318 of the housing 102 and/or removably coupled to an interior portion of the skirt 134. The paint shield 302 may be mounted along a bottom edge of the paint holder 320 between a paint nozzle 702 (see FIG. 7) and the noggin shell 314, although it will be understood that other mounting locations and configurations are contemplated. The paint shield 302 may be replaced by accessing the bottom portion of the robotic platform. The spray paint can 304 can be replaced using one of the access doors 142. The spray paint can 304 can be used to mark the ground surface above an identified underground asset.

The robotic platform 100 can also include one or more printed circuit boards (PCBs) 310 designed to execute programmable instructions associated with one or more of the subassemblies 800 described in connection with FIG. 8 and the processes described in connection with FIGS. 9-13. In some forms, the PCB 310 can include also a processor and/or a memory unit.

The robotic system 100 also includes a GPR system provided in the form of the GPR UNIT 308, a GPR controller 312, and the noggin shell 314. The GPR system can be initiated when the GPR power switch 126 is turned "ON." The GPR controller 312 can be used to control the GPR UNIT 308, including adjusting a pulse frequency or other parameters of the GPR UNIT 308. In some aspects, the GPR UNIT 308 is provided in the form of a 250 MHz antenna. The noggin shell 314 can be provided in the form of a metal plate surrounding the GPR UNIT 308. In some forms, the noggin shell 314 is provided to contact the ground surface (or nearly contact the ground surface) and protect the GPR UNIT 308 during the operation of the robotic platform 100.

The robotic system 100 can include one or more drive units 316 to control a motor and move the robotic platform 100. In some embodiments, the one or more drive units 316 can be provided in the form of servo driver(s) 1142 (see FIG. 11) that are in communication with the wheels 104. The one or more drive units 316 can be controlled autonomously and/or semi-autonomously by the control module 810 and/or using the remote control device 1146 (see FIG. 11). In some forms, the one or more drive units 316 can be designed to operate at variable speeds. In some embodiments, the one or more drive units 316 can be designed to operate at a predefined speed threshold.

The IMU 322 is provided in the form of one or more sensing devices to detect and calculate a position, an orientation, and an acceleration of the robotic platform 100. In some aspects, the localization module 816 can include the IMU 322. The processing module 806 can process the IMU 322 data with the LiDAR 175 data and odometry data from the wheel encoders 1144 to determine the robot's location. In the embodiment shown in FIG. 3, the IMU 322 is mounted internally in the housing 102 near a top interior face of the robotic platform 100, although it is to be understood that is not limiting and the IMU 322 can be mounted in other locations on or within the housing 102.

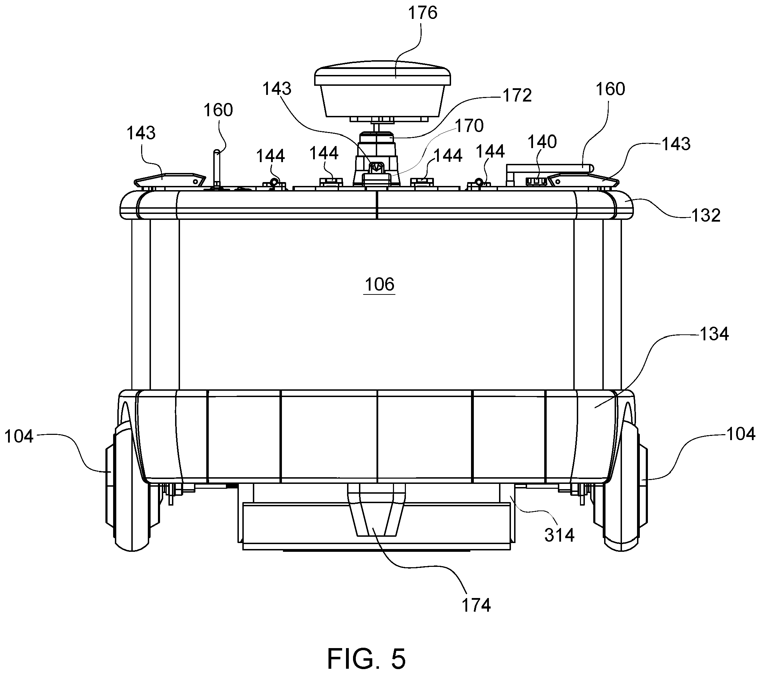

FIG. 4 illustrates a back view of the robotic platform, including the back exterior face 402. In the embodiment shown in FIG. 4, the back exterior face 112 is proximate to the paint shield 302 and opposite to the front exterior face 106 shown in FIG. 5.

FIG. 5 illustrates a front view of the robotic platform, including the front exterior face 106. In the embodiment shown in FIG. 5, the front exterior face 106 is proximate to the EM sensor 174 and opposite to the back exterior face 402 shown in FIG. 4.

FIG. 6 illustrates a side view of the robotic platform, including the second side exterior face 602 of the robotic platform. One end of the second side exterior face 602 is proximate to the EM sensor 174 and the other end of the second side exterior face 602 is proximate to the paint shield 302.

FIG. 7 illustrates a bottom view of the robotic platform 100, including the bottom exterior face 116. It will be understood that "back" "front" "top" "bottom" and "side" are used for illustrative purposes and are not considered limiting. The robotic platform 100 is designed to operate omnidirectionally.

FIG. 8 illustrates a block diagram of the subassemblies 800 of the robotic platform 100 in one embodiment, including but not limited to the communication module 802, the sensor module 804, the processing module 806, the paint module 808, the control module 810, the power module 812, the interface module 814, the localization module 816, and the connection module 818. It will be understood that the configuration of subassemblies 800 shown in FIG. 8 is not limiting.

The communication module 802 of the robotic platform 100 can include the one or more antennas 160 shown in FIGS. 1-6 and/or other forms of communication disposed on or within the housing 102. In some embodiments, the communication module 802 can include coax antennas, internal antennas, external antennas, amplifiers, and other types of antennas. The communication module 802 can also be provided in the form of a communication device, or multiple communication devices, designed to communicate using Bluetooth, satellite, cellular, Wi-Fi, internet, or other communication techniques. In some embodiments, the communication module 802 may include the one or more ports (e.g., battery charger ports 120, USB port 138, and HDMI ports 148 shown in FIGS. 1-6). The communication module 802 is designed to communicate and transmit information between the different subassemblies 800 of the robotic platform 100, a user interface(s), a network interface(s), a cloud server(s), a computing device(s), a third-party application(s), or a combination thereof.

The robotic platform 100 further includes the sensor module 804. In some embodiments, the sensor module 804 may be provided in the form of a sensor suite including a plurality of sensors designed to collect various types of data including, for example, data related to the operational characteristics of the robotic platform 100, data related to the underground assets, environmental and/or geographical data, and other types of data or information. The sensor module 804 can include multiple sensors, a single sensor utilizing different types of sensing technology, or a combination thereof. In some embodiments, the sensor module 804 can be used in a data collection process as the robotic platform 100 scans a region of interest. In some embodiments, the sensor module 804 may also be designed to monitor the status of the subassemblies 800 of the robotic platform 100.

The sensor module 804 may include one or more of the GPR UNIT 308, the LiDAR instrument 172, the EM sensor 174, the GPS unit 176, and the IMU 322. The sensor module 804 can further include one or more sensing devices, odometry sensors, data acquisition units, cameras, a computer vision system, a dual-frequency signal output system, encoders, etc. In some embodiments, the GPR data is collected simultaneously with the EM data as the robotic platform 100 moves across the ground surface. The EM data can be passively collected and/or can include the dual-frequency signal output system to distinguish between different types of assets underground (e.g., sewer line, gas line, electric cable, etc.). In some aspects, the EM sensor 174 passively detects 50 Hz and/or 60 Hz power cables (or other metallic utility assets) where a current has been induced by a nearby transmitter, although this example is should not be considered limiting. In some forms, the EM sensor 174 is collected and processed in real-time as the data is collected. In some embodiments, the GPR data is collected in real-time and processed in near real-time as soon as a scan session has completed, the GPR data is processed. In some embodiments, the GPR data is processed in real-time as the data is collected.

In some embodiments, the processing module 806 can be provided in the form of an onboard processor and a memory unit. Additional processors or other processing components may also be used in some embodiments. The processing module 806 executes one or more algorithms for the efficient onboard processing of the data collected by the sensor module 804, localization module 816, and other subassemblies 800. The post-processing methods executed by the processing module 806 are described in more detail in connection with FIGS. 9-13.

In some embodiments, the paint module 808 can include one or more spray paint cans 304, or similar ground marking devices or components. The paint module 808 can be in communication with the processing module 806, the control module 810, and localization module 816 to deploy the robotic platform 100 to apply paint to the ground surface above the identified and located assets. In some embodiments, the robotic platform 100 may include multiple paint cans 304 and apply different colors of spray paint according to the different types of underground assets identified by the EM sensor 174 dual-frequency signal output system. In some embodiments, the paint module 808 may also be in communication with the sensor module 804 to monitor paint can 304 levels and/or generate a notification via the interface module 814 to alert an operator when a paint supply is getting low or if there is a malfunction with the spray paint can 304. In some embodiments, the paint module 808 can be remotely controlled by an operator using the remote control device 1146 (see FIG. 11). In other embodiments, the paint module 808 can be controlled automatically by the control module 810 or another of the subassemblies 800.

The robotic platform 100 further includes the control module 810. In some embodiments, the robotic platform 100 may be autonomous, semi-autonomous, or remotely controlled by an operator using the remote control device 1146 or controlled by another control system (not shown). The control module 810 may also include other components or devices designed to allow the robotic platform 100 to traverse a surface (e.g., road, grass, field, forest, rocks, and other terrain) including, but not limited to the drive unit 316, one or more a motor, other motor controls, motor driver(s), steering system, etc.

In some embodiments, the control module 810 can include a controller and/or processor designed to execute programmable instructions, including the processing methods completed by the processing module 806. The control module 810 is designed to send commands or other signals to the drive unit 316 and other aspects of the robotic platform 100 to drive the robotic platform 100 to a target location. The target location can be determined by the localization module 816 using the processes described in connection with FIGS. 9-13. In some embodiments, the control module 810 can be provided in the form of a navigation system used to self-drive and navigate the robotic platform 100 during data collection and deployment for marking the utility lines or other identified underground assets. In some embodiments, the control module 810 may be activated by one or more switches, (e.g., the control system power switch 130). In some embodiments, the control module 810 may be designed to automatically activate when the robotic platform 100 is on the ground, or when triggered by the remote control device 1146 or the interface module 814. It will be understood that the examples provided are non-limiting and the system can be initiated by alternative processes and/or components.

In some embodiments, the power module 812 can include one or more batteries 306. The battery 306 may be rechargeable and/or removable to facilitate charging. In some embodiments, the batteries 306 are provided in the form of 24VDC swappable lithium iron phosphate battery packs. Other power sources may be used, including but not limited to other types of batteries, hard-wire power, hydraulic, pneumatic, wireless power bank, fuel, etc. The power module 812 can include one or more rechargeable power sources.

In some embodiments, the interface module 814 may include a digital display 136 provided on the robotic platform 100. The interface module 814 can include one or more LED indicators 122 or other icons, display configurations, indicators, or similar. The interface module 814 can also include a computing device or computer display (not shown). In some embodiments, the computing device(s) can be operatively connected to the robotic platform using wireless technology and/or through the one or more ports 120, 138, 140. The interface module 814 may include one or more displays for displaying the output of the processing module and associated post-processing methods described herein. The interface module 814 may also accept user input so the data and output information can be manipulated, edited, or otherwise modified during the processing methods. The interface module 814 can also include one or more remote control devices (including but not limited to the remote control device 1146 discussed in connection with FIG. 11) for controlling the robotic platform 100 and/or individual subassemblies 800. In some embodiments, the processing module 806 is in direct communication with the interface module 814 to display a 3D migration and a field amplitude plot with the identified underground assets. In a non-limiting example, an operator can view and select a point on a C-scan map displayed on a user interface, and the robotic platform 100 can be deployed to mark the location using spray paint.

In some embodiments, the robotic platform 100 may include the localization module 816. The localization module 816 can include but is not limited to the LiDAR instrument 172, the IMU 322, and an odometry node 1120 (see FIG. 11). In some embodiments, the localization module 816 can use the encoder data from the wheels 104, including raw count data, and correlate the raw count data with a detected speed of the robotic platform 100 (or a speed value retrieved from the control module 810). The localization module 816 can also compare the raw count data and speed data for the wheels on each of the first side 108 and the second side 602 of the housing 102, along with detected vehicle dynamics using a custom dynamics model to detect if the robotic platform 100 is turning or moving straight based on the speed and direction of the wheels 104.

In some aspects, the localization module 816 may be provided as a standalone plug-and-play processing system that can be used to integrate with legacy systems to provide a retrofit solution for advanced data collection and processing techniques. In some embodiments, the localization module 816 can be provided in the form of a separate sub-assembly that can be used with, or installed on, a conventional pushcart system to improve the data collection and processing techniques by implementing one or more of the advanced data collection and processing methods described herein without using the entire robotic platform 100. In at least this way, the systems and processes described herein can be implemented as a retrofit system for improved data collection techniques.

In some embodiments, the connection module 818 can be provided in the form of one or more plugs, ports, cables, or other types of connective devices. The connection module 818 can include the one or more ports 120, 138, 140 shown in FIGS. 1-6. In some embodiments, the connection module 818 can include both wired and wireless connections between the subassemblies 800 of the robotic platform 100 in addition to connections to third-party or external computing devices or systems (e.g., cloud servers, GIS platforms, etc.). In some embodiments, the robotic platform 100 includes dynamic and scalable data collection, processing, and storage features to allow for efficient integration with third-party systems for several applications.

FIG. 9 illustrates a method for an underground asset detection and location process 900 using a robotic platform 100, including the robotic platform 100 described in connection with FIGS. 1-8. In some embodiments, the method includes the step of initiating the GPR unit 308 and the EM sensor 174 at step 902 such that the GPR unit 308 and the EM sensor 174 begin collecting data. Data from the GPR unit 308 and the EM sensor 174 can be received and/or collected by the sensor module 804 at step 904 based on the signals received from using the GPR unit 308 and the EM sensor 174. In some forms, the sensor data may be stored in a data store, cloud server, memory unit, or a combination thereof. The GPR data and the EM data are designed to be collected simultaneously or substantially simultaneously to provide the relevant sensor data for a region of interest in a single scan (instead of conventional methods that include collecting data using a GPR and a separate scan process/session to collect the EM data). In some applications, like public roadway scans for example, the improved data collection method described herein provides an efficient data collection process such that both the GPR data and the EM data are collected in a single scan, which can reduce the time needed to scan a region of interest and also thereby also reduce an impact to traffic flow. The robotic platform 100 can also be configured so that only one of the GPR unit and/or EM sensor 174 are operating at any given time. Additionally, the semi-autonomous robotic platform 100 can be deployed at a consistent speed and follow a programmed travel path to ensure data collection is dense, consistent, and not prone to the same human error as conventional pushcart methods of data collection.

The robotic platform 100 also improves data collection processes over conventional systems and methods for multiple reasons. For example, the robotic platform 100 collects high-density GPR UNIT 308 and EM sensor 174 in a tight grid pattern (e.g., typically 10-cm spacing with centimeter-level localization accuracy) as the robotic platform 100 scans an area of interest. In at least this way, the robotic platform 100 improves existing scanning methods for locating underground assets, resulting in a highly dense GPR data set that is 2.5 to 10 times more than a typical human operator can collect using conventional systems and methods. As an example, the traditional human-operated pushcart GPR collection methods typically include collecting data on a 0.5-meter or 0.25-meter line spacing. However, it is not uncommon for data collection to occur using 1.0-meter line spacing with conventional systems and methods.

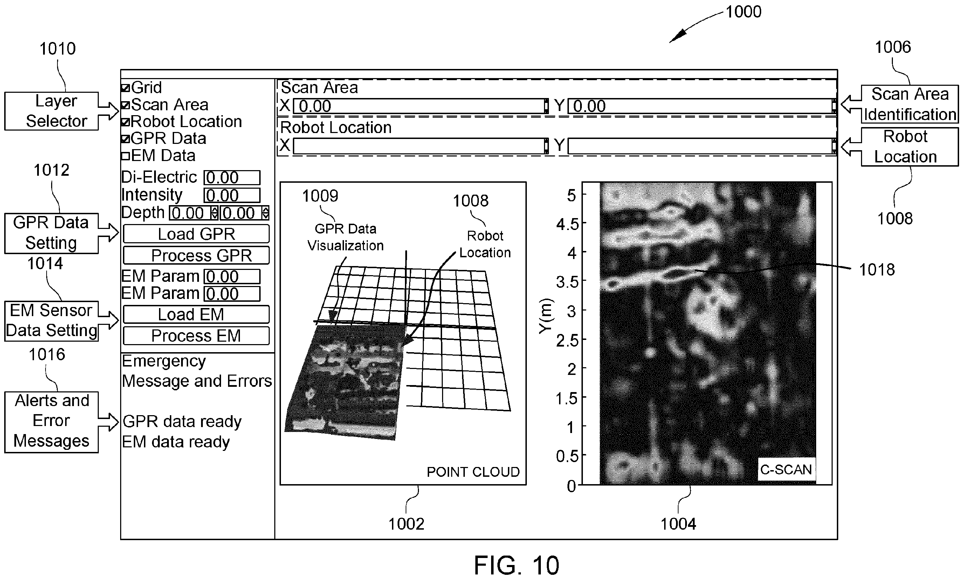

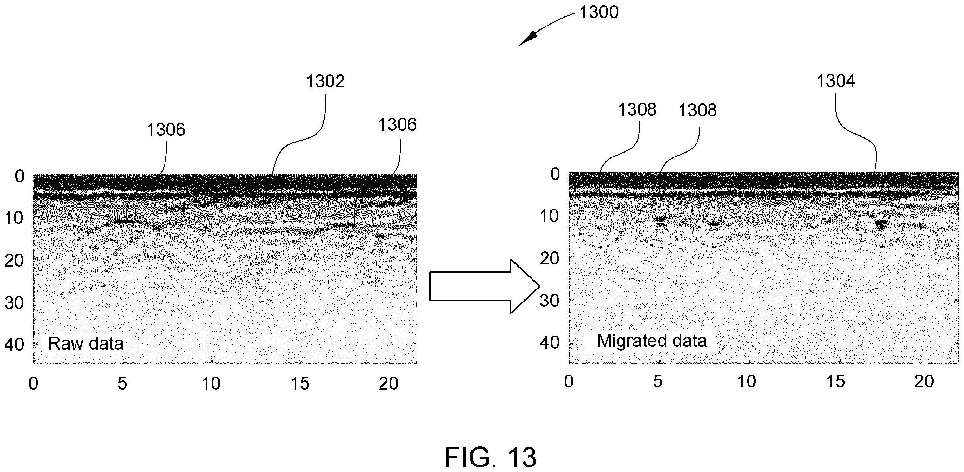

After the data is collected, the onboard processing module can utilize 3D migration post-processing and other post-processing methods at step 906 to create a 3D point cloud and a C-scan map at step 908, as described in more detail in connection with FIGS. 10 and 13.

The post-processing techniques at step 906 can also generate a field intensity/field amplitude output plot at step 908 based on the collected EM data. The post-processing outputs can be generated on the interface module 814 to provide an interactive visualization of the underground infrastructure identified, including the locations of the underground assets (see FIG. 10). In some embodiments, dual-frequency signal output systems can be used to differentiate between types of assets (e.g., gas pipe, water pipe, etc.) and these distinguishing asset features/labels can be displayed on a user interface as well. In some embodiments, the dual-frequency signal output system can be designed to provide a custom frequency for a particular type of asset, which is then recorded and processed in the processing module 806 to identify the specific underground assets.

At step 910, the system performs localization using one or more LiDAR simultaneous localization and mapping (SLAM) algorithms and data from the encoder(s), as described in more detail in connection with FIGS. 11 and 12. The processing module 806 may be designed to collect and read encoder data from the encoders 1144 associated with the one or more wheels 104 and translate the encoder data into revolutions. The system is also designed to process the IMU 322 data of the robot using a custom dynamics model to calculate the current robot location 1008. The underground assets identified 1018 at one or more asset locations can be shown on the C-scan map 1004 (see FIG. 10). At step 914, the localization module 816 can send a deployment signal to the control module 810 to deploy the robotic platform 100 to apply paint using the paint module 808 to the identified asset location(s).

As shown in FIG. 10, a user interface 1000 can be provided to display one or more outputs generated from the data collection and processing steps described in connection with FIGS. 9 and 11-13. One or more user interfaces 1000 can be provided on the robotic platform 100, the remote control 1146, a computer system or display, a smart phone, a tablet, or the like such that the outputs may be viewed. The user interface 1000 can include both the 3D point cloud 1002, the C-scan 1004, a scan area identification 1006, a robot location 1008, one or more data layers 1010, a GPR data setting 1012, an EM data setting 1014, alerts and error messages 1016, and a visual display of one or more identified underground assets 1018.

The 3D point cloud map 1002 is generated from the processed GPR data, which provides a GPR data visualization 1009 that illustrates the thickness of the ground and the robot location 1008. The C-scan map 1004 illustrates 2D data to indicate a location and depth of an identified underground asset 1018 using a 3D migration process described in more detail in connection with FIG. 13. The scan area identification 1006 includes coordinates associated with the area shown in the C-scan map 1004. In some forms, the user interface 1000 can also include coordinates or other identifying information for an entire region of interest, for example, the area shown in the GPR data visualization 1009. The user interface 1000 can also include information related to the density of the GPR data and/or the EM data collected, including the spacing for the data collected. The robot location 1008 can be provided in the form of an icon or other indicator on the point cloud map 1002 and/or also provided in the form of coordinates (X, Y). In some embodiments, the localization module 816 and/or processing module 806 can be integrated with a GPS and/or GIS system to provide actual global coordinates for the scan area identification 1006, the robot location 1008 (e.g., a current robot location, a planned path for the robot, a target robot location based on the planned path for the robot, etc.), and the one or more identified underground assets 1018 (e.g., one or more asset locations). Although not shown in FIG. 10, the user interface 1000 can also include information related to a start point and an endpoint for painting (e,g., a target location for the robot platform). In some embodiments, the start point and the endpoint can be determined automatically using the paint module 808, the localization module 816, the control module 810, or a combination thereof. The user interface 1000 can also provide a visual output of the field intensity/field amplitude plot generated from the output of the onboard post-processing of the EM data.

The layer selector 1010 can be provided in the form of one or more filters or similar checkboxes for receiving user input. The user interface can update the information displayed based on one or more selections of the layer selector 1010. For example, the layer selector can include turning on or off the grid shown in the point cloud map 1002, the scan area identification 1006, the robot location 1008, the GPR data, the EM data, or a combination thereof. The GPR data setting 1012 provides inputs for adjusting the settings or parameters of the GPR data displayed when the GPR data is selected in the layer selector 1010. The GPR data settings 1012 can include a dielectric value, an intensity value, a depth, a relative permittivity value, a time offset value, a rendering mesh value, a z oversampling value, a threshold value, an input to load the GPR data, and an input to process GPR data. The EM sensor data setting 1014 provides inputs for adjusting the settings or parameters of the EM data when the EM data is selected in the layer selector 1010. The EM data settings 1014 can include one or more EM parameters, an EM target frequency, a rendering mesh, an input to load the EM data, and an input to process the EM data.

The alerts and error messages 1016 can be provided in the form of one or more notifications, error codes, or other alerts. In some embodiments, the alerts and error messages 1016 can be generated by the interface module 814. For example, the alerts and error messages 1016 can include a notification that the GPR data is ready after a user has selected the input to load the GPR data and the input to process the GPR data. The notification can also include that the EM data is ready after a user has selected the input to load the EM data and the input to process the EM data. The alerts and error messages 1016 can also provide an alert or notification if there was an error while processing the GPR data and/or EM data, a low paint supply, a low battery, a loose wheel, or other sensed parameter related to the operation of the robotic platform 100 and aspects thereof.

The user interface 1000 can also include one or more control inputs (not shown). The control inputs can include starting the robot, stopping the robot, starting data acquisition (DAQ), starting scanning, stop scanning, starting painting, stop painting, turning on the GPR unit 308, turning off the GPR unit 308, turning on the EM sensor 174, turn off the EM sensor 174, clear a graphic user interface (GUI), etc. The examples provided are non-limiting and the user interface 1000 can include other settings, parameters, options, and interface configurations in some embodiments.

FIG. 11 illustrates a system block diagram of the robot operating system (ROS) of the robotic platform 100. The LiDAR node 1106 initiates a laser scan 1122 using the LiDAR instrument 172, which generates LiDAR scan data. The LiDAR scan data is processed by a SLAM algorithm in the SLAM node 1108 executed by the processing module 806. The SLAM node 1108 also receives information from an odometry node 1120, including one or more navigation messages 1130 and encoder data from the wheel encoders 1144. The SLAM node 1108 also receives sensor messages with IMU data from the IMU 322. The LiDAR data, IMU data, and odometry data is processed using the SLAM algorithm to determine a current location of the robotic platform 100 and generate a robot pose stamp message 1128. The current location of the robotic platform 100 can be used by the localization module 816 to plan a path and generate programmable instructions related to semi-autonomous or autonomous navigation of the robotic platform 100 at the path planning and navigation node 1118. The ROS can track and monitor the robot location 1008 using a location logging node 1116 as it travels along the navigation path from its current location to the target location (e.g., the underground asset identified 1018, a scan area, or a region of interest, etc.). In some embodiments, the location logging node 1116 utilizes the LiDAR instrument 172, the GPS unit 176, the encoder data from the encoders 1144, or a combination thereof to track and monitor the robot location 1008. A timestamp 1126 can be applied to the sensor data collected from the GPR control unit node 1114, the EM DAQ node 1112, and the location logging node 1116. The timestamp data from the timestamp node 1126 can be processed with the location data from the location logging node 1116 to generate a timestamp+location data file 1152. The timestamp data from the timestamp node 1126 can be processed with the GPR data from the GPR control unit node 1114 to generate a timestamp+GPRsignal data file 1154. The timestamp data from the timestamp node 1126 can be processed with the EM data from the EM DAQ node 1112 to generate a timestamp+EMsignal data file 1156. In some forms, the data files 1150 can be fused to generate a global environment that can be exported to one or more GIS platforms or other third-party applications, as explained in more detail in connection with FIG. 12.

The ROS also interfaces and/or communicates with one or more components 1140 external to the ROS, including a PCB 1148, a servo driver 1142, the one or more wheel encoders 1144 (discussed in connection with FIG. 1), and the remote control device 1146. In some aspects, the PCB 1148 can be provided in the form of a power board and a control board, including the one or more PCBs 310 shown in FIG. 3. The servo driver 1142 can be provided in the form of one or more drive units 316 shown in FIG. 3, or another form of a motor controller. In some embodiments, the servo driver 1142 receives information from the path planning and navigation node 1118 via the PCB 1148 to initiate self-driving the autonomous and/or semi-autonomous robotic platform 100. The remote control device 1146 can be provided in the form of a radio control (RC) manual control, or other form of handheld controller. In some embodiments, the remote control device 1146 can be provided in the form of a computing device like a laptop, tablet, or mobile device. It will be understood that the examples provided are non-limiting.

FIG. 12. illustrates the data processing method provided. The data processing method can combine a local coordinate system data process 1202 with a global coordinate system process 1204 to generate actual coordinates (X, Y) associated with one or more underground utilities, deploy the robotic platform 100 to apply paint at a location of the one or more underground utilities and generate data associated with the identified utilities to export to a GIS-system.

The method includes a hardware aspect 1208, a software aspect 1210, and an output 1206. The hardware aspect 1208 of the local coordinate system process 1202 includes a sensor module with a GPR 1212 and a passive EM 1214, and a localization module 1216 with LiDAR, an IMU, and an odometry unit. In some aspects, the GPR 1212 is provided in the form of the GPR unit 308 described in connection with FIG. 3. In some forms, the EM 1214 is provided in the form of the EM sensor 174 described in connection with FIG. 1. In some forms, the LiDAR of the localization module 1216 is provided in the form of the LiDAR instrument 172 described in connection with FIG. 1. In some forms, the IMU of the localization module 1216 is provided in the form of the IMU 322 described in connection with FIG. 3. In some forms, the odometry unit of the localization module 1216 is provided in the form of odometry node 1120 and or the encoders 1144 described in connection with FIG. 11. The hardware aspect 1208 of the global coordinate system 1204 includes a GPS 1218. In some forms, the GPS 1218 can be provided in the form of the GPS unit 176. The method can also include other hardware components not shown in FIG. 12, including but not limited to the hardware components of the robotic platform 100 described in connection with FIGS. 1-7.

The software aspect 1210 of the method can include onboard post-processing of the GPR data in the form of 3D migration 1220, described in more detail in connection with FIG. 13. The software aspect 1210 can also include the onboard post-processing of the passive EM data at step 1222. The software aspect 1210 for the localization module 1216 can include processing the data from the LiDAR, IMU, and odometry unit of the localization unit 1216. The data is processed by executing a LiDAR SLAM module 1224 using the processing module 806. The LiDAR SLAM module 1224 may generate a high-resolution 2D map 1228 and generate a trajectory 1230 with three degrees of freedom (x, y, θ), where theta is the heading. The software aspect 1210 of the global coordinate system process 1204 includes launching GPS coordinates 1226 for the robot location 1008 and generating a localization 1232 with three degrees of freedom (longitude, latitude, and altitude).

The output 1206 of the local coordinate system process 1202 includes creating a dense 3D point cloud map and C-scan map 1232 based on the processed GPR data 1212 and a field intensity/field amplitude plot 1234 based on the processed passive EM data 1214. The output 1206 of the software aspects 1210 of the localization unit 1216 and the global coordinate system process 1204 can be fused with the timestamp data 1126 (see FIG. 11) to generate programmable instructions using a navigation algorithm on the actual location associated with one or more identified underground assets using global coordinates 1236. The combined output 1206 of the local coordinate system process 1202 and the global coordinate system 1204 includes deploying the robotic platform 100 at step 1238 and applying paint to the ground surface above the identified underground asset using the paint module 808. The output 1206 can also include generating one or more streams of processed data and exporting the processed data to a GIS system or other third-party platform. In some forms, the processed data streams can be provided for digital twin building to digitally reconstruct the infrastructure of the underground assets.

FIG. 13 is a non-limiting example of the 3D migration of the onboard post-processing technique associated with the GPR data described in connection with step 906 of FIG. 9. In this example, raw signal data 1302 from the GPR unit 308 can be transformed into migrated data 3104 to show a representation of the underground asset(s) from apparent locations to true locations. In some embodiments, the onboard GPR post-processing includes 3D migration which implements a synthetic aperture focusing technique. The synthetic aperture focusing technique processes the data collection region as a volume instead of a cross-section and the processing module 806 analyzes adjacent scans and other information to generate the point cloud map 1002 information and a C-scan map 1004 as described in connection with FIG. 10. The raw data 1302 is an example of an output from conventional utility detection systems. Typically, the raw data 1302 is transmitted to an offsite SME (e.g., remote from the scan location) to interpret the raw data 1302. The onboard processing step of both the GPR data and the EM data using the robotic platform 100 improves existing methods of data collection and processing for many reasons, but particularly because the onboard processing occurs in real-time or nearly real-time at the job site, using the hardware components and software aspects of the robotic platform 100. The robotic platform 100 processes the collected sensor data (not only from the GPR unit 308 and EM sensor 174, but also the LiDAR instrument 172, the IMU 322, the GPS 176, and other sensors) to generate the migrated data output 1304. The migrated data output 1304 transforms the wave information 1306 from the raw data output 1302 and generates actual locations, including coordinates and depths for the identified utility assets 1308, without using an offsite SME to interpret the data and generate associated coordinates. In some embodiments, the onboard post-processing method can further include identifying the one or more utility assets using the dual-frequency signal output system.

In other embodiments, other configurations are possible. For example, those of skill in the art will recognize, according to the principles and concepts disclosed herein, that various combinations, sub-combinations, and substitutions of the components discussed above can provide appropriate control for a variety of different configurations of robotic platforms for a variety of applications.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A portable robotic platform for locating underground assets, comprising:
a housing including a shell and one or more wheels;
an encoder in communication with the one or more wheels;
a sensor module including a LiDAR instrument, a ground penetrating radar, and an electromagnetic sensor;
a processing module including a processor and a memory unit, wherein the processing module is designed to process data collected from the sensor module to identify an asset location associated with the underground assets;
a localization module designed to determine a current robot location associated with the portable robotic platform based on the processed data collected from the sensor module; and
a paint module provided in a form of a paint can in communication with a control module designed to apply paint on a ground surface.

2. The robotic platform of claim 1, wherein the processing module is designed to execute post-processing of the data from the ground penetrating radar and the electromagnetic sensor to identify the location of the underground assets.

3. The robotic platform of claim 2, wherein the post-processing is provided in the form of a 3D migration using a synthetic aperture focusing technique.

4. The robotic platform of any one of claims 1 to 3, wherein the localization module is also designed to determine a navigation path based on the current robot location of the portable robotic platform and coordinates of one or more identified underground assets.

5. The robotic platform of any one of claims 1 to 4, wherein the processing module is also designed to generate a field intensity and field amplitude output plot based on the data from the electromagnetic sensor.

6. The robotic platform of any one of claims 1 to 5, further comprising a control module with one or more drive units designed to operate a motor of the robotic platform.

7. The robotic platform of any one of claims 1 to 6, wherein the communication module is operatively connected to a remote control device for controlling the robotic platform;
and preferably wherein the communication module includes a coax antenna.

8. The robotic platform of any one of claims 1 to 7 further comprising a power module provided in a form of one or more batteries.

9. The robotic platform of any one of claims 1 to 8, wherein the housing includes one or more access doors provided in a form of latched openings to provide access to one or more of a power module and the paint module.

10. The robotic platform of any one of claims 1 to 9, further comprising a dual-frequency signal output system designed to map a network of underground infrastructure and identify different types of the underground assets.

11. The robotic platform of any one of claims 1 to 10, wherein the interface module is designed to generate and transmit information related to the location of the underground assets to one or more third-party applications.

12. A method of detecting and locating underground assets using a robotic platform, the method comprising:
providing the robotic platform comprising a housing, a sensor module, and a processing module;
initiating the sensor module provided in a form of a ground penetrating radar, a LiDAR instrument, and an electromagnetic sensor;
collecting data from the ground penetrating radar, the LiDAR instrument, and the electromagnetic sensor as the robotic platform travels across a ground surface;
processing the data from the ground penetrating radar, the LiDAR instrument, and the electromagnetic sensor onboard the robotic platform using the processing module;
identifying a location of one or more underground assets using the data process onboard the robotic platform; and
generating a visual output on a display of one or more identified underground assets.

13. The method of claim 12 further comprising:
deploying the robotic platform to travel to a location of the one or more identified underground assets; and
applying paint to the ground surface above the one or more identified underground assets; and preferably wherein the visual output includes a C-scan map.

14. The method of claim 13, wherein the visual output includes a point cloud map.

15. The method of claim 13, wherein the processing data onboard the robotic platform includes a 3D migration using a synthetic aperture focusing technique.
